# EUROPÄISCHE PATENTSCHRIFT

(11) **EP 1 138 188 B1**
(45) Veröffentlichungstag und Bekanntmachung des Hinweises auf die Patenterteilung: **09.05.2007**
(21) Anmeldenummer: 01105603.3
(22) Anmeldetag: 06.03.2001
(51) Int. Cl.: A01D 90/04, A01F 15/08, A01F 15/10

(54) **Schneidwerk**
Cutting device
Dispositif de coupe

(30) Priorität: 31.03.2000 DE 20005965 U
(43) Veröffentlichungstag der Anmeldung: 04.10.2001
(73) Patentinhaber: Kverneland Group Gottmadingen GmbH & Co. KG, 78244 Gottmadingen (DE)
(72) Erfinder: Kaeppeler, J., 78333 Stockach (DE)
(74) Vertreter: Grünecker, Kinkeldey, Stockmair & Schwanhäusser Anwaltssozietät

(56) Entgegenhaltungen:
- EP-A- 0 933 018
- DE-A- 3 322 656
- DE-C- 19 534 138
- GB-A- 2 032 376

## Beschreibung

Die Erfindung betrifft ein Schneidwerk der im Oberbegriff des Anspruchs 1 angegebenen Art.

Bei einem Schneidwerk für eine Ballenpresse (Rundballenpresse oder Großpackenpresse) wird der Schneidrotor üblicherweise von der Zapfwelle eines Schleppers angetrieben. Bei einem Ladewagen kann ein eigener Antrieb für den Schneidrotor vorgesehen sein. Im Betrieb kommt es im Förderschacht beim Rotor fallweise zu einer Verstopfung durch das Erntegut, bei der die Überlastkupplung anspricht und der Rotor stehen bleibt. Die Verstopfung muss dann mühsam und zeitaufwendig beseitigt werden.

Gemäß DE 19 53 4138 C wird zum Beheben einer Verstopfung ein Aktuator eingesetzt, der über die in einer Richtung sperrende Kupplung am Rotor angreift und diesen entgegen seiner normalen Schneidrichtung verdreht, um die Verstopfung zu beseitigen. Das zurückgeförderte Erntegut kann zu Problemen bei stromaufliegenden Komponenten führen. Die Elemente des Schneidwerks können beim Zurückdrehen beschädigt werden, da diese Elemente eigentlich auf das Zusammenwirken mit Drehung des Rotors in Schneidrichtung ausgelegt sind. Schließlich ist zur Beseitigung einer Verstopfung erheblicher Aufwand erforderlich und müssen der Aktuator und seine Antriebsverbindung zum Rotor starksein, da der Aktuator allein für die Behebung der Verstopfung zu sorgen hat.

Der Erfindung liegt die Aufgabe zugrunde, ein Schneidwerk der eingangs genannten Art zu schaffen, bei dem Verstopfungen auf andere, einfache Weise beseitigbar sind.

Die gestellte Aufgabe wird mit den Merkmalen des Anspruchs 1 gelöst.

Da der Aktuator den Rotor im Falle einer Verstopfung in der normalen Schneidrichtung weiterdreht, kann zum Beseitigen der Verstopfung nicht nur das vom Aktuator aufgebrachte Drehmoment benutzt werden, sondern auch das normalerweise zum Antreiben des Rotors eingesetzte Drehmoment. Der Aktuator und der Antriebsstrang überwinden die Verstopfung sozusagen mit vereinten Kräften. Es wird kein Erntegut rurückgefördert, wo es Probleme hervorrufen könnte. Außerdem ist die Gefahr gering, dass die Elemente des Schneidwerks beim Beseitigen der Verstopfung beschädigt werden, da Relativbewegungen und Relativkräfte auftreten, wie bei normalem Schneidbetrieb.

Zweckmäßigerweise wirkt der Aktuator im Antriebsweg zum Rotor stromab der Überlastkupplung, damit das von ihm erzeugte Drehmoment zusätzlich zu dem vom Antriebsstrang stammenden Drehmoment zur Einwirkung bringbar ist.

Funktionssicher ist ein Aktuator in Form einer Kolbenzylindereinheit, die über einen Schwenkhebel und eine Klinke auf ein Klinkenrad an einer Welle des Rotors wirkt. Es könnte jedoch auch ein anderes Getriebe, z. B. ein Schrittschaltwerk benutzt werden.

Zweckmäßigerweise greift der Aktuator am den Anschluss des Antriebsstrangs gegenüberliegenden Rotorwellenende an. Da beide Antriebe sozusagen von zwei Seiten auf den Rotor einwirken, sind keine besonderen Verstärkungen der Elemente erforderlich. Alternativ könnte auch ein Hydromotor mit kontinuierlicher Drehbewegung über eine Freilaufkupplung auf die Rotorwelle einwirken.

Ist das mit dem Aktuator am Rotor erzeugbare Drehmoment mindestens so hoch wie das Ansprechdrehmoment der Überlastkupplung, dann lässt sich das am Rotor wirkende Drehmoment bei Zuschalten des Aktuators mindestens verdoppeln. In den meisten Fällen reicht jedoch ein Aktuator-Drehmoment kleiner als das Ansprechdrehmoment aus.

Der Aktuator kann über eine Steuervorrichtung wahlweise zuschaltbar sein, wobei er zweckmäßigerweise bei Ansprechen der Überlastkupplung unterstützend eingreift oder sogar bereits vor Ansprechen der Überlastkupplung. Hierfür lässt sich das abzeichnende Ansprechen der Überlastkupplung abtasten, um den Aktuator im richtigen Moment zuzuschalten. Dies erfolgt z.B. automatisch.

Als flankierende Maßnahme können zumindest einige der Schneidklingen und/oder dem Rotor zugeordneten Abstreifer bei Zuschalten des Aktuators in eine Passivstellung verstellt werden, um die Verstopfung leichter und rasch beseitigen zu können.

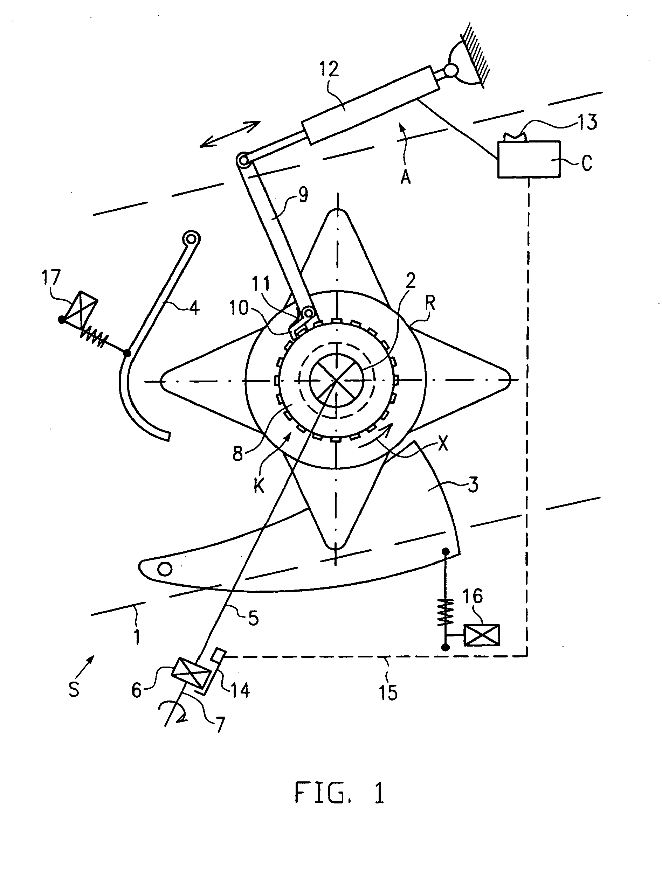

Anhand der Zeichnung wird eine Ausführungsform des Erfindungsgegenstandes erläutert. Es zeigt die Fig. 1 einen schematischen Querschnitt eines Teils einer Schneidvorrichtung.

Eine Schneidvorrichtung S in Fig. 1 ist zum Schneiden landwirtschaftlichen Ernteguts konzipiert und üblicherweise in eine Rundballenpresse, in eine Großpackenpresse oder in andere Pressen oder einen Ladewagen eingebaut, um durch ein Förderschacht 1 gefördertes Erntegut zu schneiden. Quer durch den Förderschacht 1 erstreckt sich eine Welle 2, die einen Rotor R trägt, der z. B. mit in Längsrichtung der Welle beabstandeten und in Umfangsrichtung verteilten Rotorflügeln bestückt ist. Dem Rotor R sind Schneidklingen 3 zugeordnet, die bei Überlastung, gegebenenfalls sogar auch gesteuert, aus der gezeigten Schneidstellung verlagerbar sind. Ferner können dem Rotor R Abstreifer 4 zugeordnet sein. Auch die Abstreifer 4 können gegebenenfalls bei Überlast ausweichen oder gesteuert wegbewegt werden. Die Welle 2 des Rotors R ist über einen Antriebsstrang 5, 7, beispielsweise von der Zapfwelle eines Schleppers her, drehangetrieben. Im Antriebsstrang 5, 7 ist eine Überlastkupplung 6 enthalten, beispielsweise eine Rutschkupplung, die auf ein vorbestimmtes Überlastmoment eingestellt ist. Der Rotor R, der auch eine Förderaufgabe für das Erntegut hat, wird normalerweise in Schneidrichtung X drehangetrieben, d.h. in Fig. 1 entgegen dem Uhrzeigersinn.

Dem Rotor R ist ein Aktuator A zugeordnet, dessen Aufgabe darin besteht, den Rotor R bei der Überwindung einer Verstopfung zu assistieren. Der Aktuator über ein auf der Welle 2 befestigtes Klinkenrad 8 und einen Schwenkhebel 9 an der Welle 2 oder auch direkt am Rotor R an, zweckmäßigerweise am dem Anschluss des Antriebsstranges 5, 7 gegenüberliegenden Wellenende. Am Schwenkhebel 9 ist eine Klinke 10 schwenkbar gelagert, die durch eine Feder 11 in eine Eingriffsstellung mit dem Klinkenrad 8 vorgespannt ist. Das Klinkenrad 8 bildet mit der Klinke 10 der Feder 11 eine Art Freilauf, d.h. eine in einer Drehrichtung übertragende und in der Gegenrichtung freilaufende Kupplung K. Anstelle des Klinkenrades mit der Klinke 10 und dem Schwenkhebel 9 könnte auch ein anderer Freilauf, z.B. mit einem Kugelgesperre oder dgl., für diese Aufgabe verwendet werden. Der Aktuator A ist im gezeigten Ausführungsbeispiel eine Kolbenzylindereinheit 12, z.B. eine hydraulische Kolbenzylindereinheit, die mit einem Ende stationär abgestützt und mit dem anderen Ende am Schwenkhebel 9 angelenkt ist. Über den Aktuator A lässt sich auf die Welle 2 ein Drehmoment ausüben und den Rotor R in der normalen Schneidrichtung X treiben. Dazu wird der Aktuator A in einzelnen Hüben betätigt und der Rotor R in Schneidrichtung X schrittweise weitergedreht.

Alternativ könnte ein Hydromotor oder ein Elektro-Getriebemotor für den gleichen Zweck eingesetzt werden, der zweckmäßigerweise über einen Freilauf an der Welle 2 angreift und gegebenenfalls sogar ein kontinuierliches Drehmoment erzeugt.

Der Aktuator A ist an eine Steuervorrichtung C angeschlossen, die beispielsweise einen Betätiger 13 besitzt, mit dem der Aktuator A zuschaltbar ist, falls es aufgrund einer Verstopfung zum Ansprechen der Überlastkupplung 6 kommen sollte. Der Aktuator A kann mit Ansprechen der Oberlastkupplung 6 voreilend oder erst später zugeschaltet werden. Um den Aktuator bei oder vor Ansprechen der Überlastkupplung 6 zuschalten zu können, kann die Steuervorrichtung C über eine Steuerleitung 15 an einen Sensor 14 angeschlossen sein, der den Betriebszustand der Überlastkupplung 6 abtastet und ein Betätigungssignal für den Aktuator A erzeugt, sobald die Gefahr besteht, dass die Überlastkupplung 6 anspricht (automatische Steuerung). Das Erntegut wird dann entweder nur mit dem Drehmoment des Aktuators A in Schneidrichtung weitergefördert, oder mit dem Drehmoment des Aktuators A und dem Drehmoment, das über den Antriebsstrang 6, 7 übertragen wird. Es lässt sich auf diese Weise zumindest kurzzeitig das doppelte Drehmoment oder mehr bzw. weniger auf den Rotor aufbringen, um die Verstopfung zu beseitigen. Im Fall einer Verstopfung können die Schneidklingen 3 und/oder die Abstreifer 4 selbsttätig, z.B. gegen Federbelastung, nachgeben. Alternativ ist es auch denkbar, der Beseitigung der Verstopfung dadurch zu assistieren, dass die Schneidklingen 3 und/oder die Abstreifer 4 gesteuert vom Rotor R wegbewegt werden. Dazu könnten Antriebe 16, 17 dienen, die gegebenenfalls ebenfalls mit der Steuervorrichtung C verbunden sind.

## Patentansprüche

1. Schneidwerk (S) für landwirtschaftliches Erntegut, insbesondere für eine Ballenpresse oder einen Ladewagen, mit einem in einem Förderschacht (1) relativ zu Schneidklingen (3) in einer Schneidrichtung (X) drehantreibbar gelagerten Rotor (R), der an einen eine Überlastkupplung (6) enthaltenden Antriebsstrang (7, 5) angeschlossen ist, und mit einem wahlweise zuschaltbaren Aktuator (A), mit dem der Rotor (R) im Fall einer Verstopfung über eine in nur einer Richtung wirkende Kupplung (K) drehbar ist, **dadurch gekennzeichnet, dass** der Aktuator (A) über die Kupplung (K) auf den Rotor (R) in dessen normaler Schneidrichtung (X) einwirkt.

2. Schneidwerk nach Anspruch 1, **dadurch gekennzeichnet, dass** der Aktuator (A) im Antriebsweg zum Rotor (R) stromab der Überlastkupplung (6) zur Einwirkung bringbar ist.

3. Schneidwerk nach Anspruch 1, **dadurch gekennzeichnet, dass** der Aktuator (A) wenigstens eine Kolbenzylindereinheit (12) ist, die über einen Schwenkhebel (9) und eine Klinke (10) auf ein Klinkenrad (8) oder ein Schrittschaltwerk an einer Welle (2) des Rotors (R) wirkt.

4. Schneidwerk nach Anspruch 1, **dadurch gekennzeichnet, dass** der Aktuator (A) an dem einen Anschluss des Anschlussstranges (7, 5) gegenüberliegenden Rotorwellenende angreift.

5. Schneidwerk nach Anspruch 1, **dadurch gekennzeichnet, dass** der Aktuator (A) ein über die als Freilaufkupplung ausgebildete Kupplung (K) an dem Rotor (R) angreifender Hydromotor ist.

6. Schneidwerk nach wenigstens einem der vorhergehenden Ansprüche, **dadurch gekennzeichnet, dass** das mit dem Aktuator (A) am Rotor (R) erzeugbare Drehmoment in einer vorbestimmten Relation zum Ansprechdrehmoment der Überlastkupplung (6) steht.

7. Schneidwerk nach wenigstens einem der vorhergehenden Ansprüche, **dadurch gekennzeichnet, dass** der Aktuator (A) über eine Steuervorrichtung (C) wahlweise und bei oder kurz vor Ansprechen der Überlastkupplung (6) zuschaltbar ist.

8. Schneidwerk nach wenigstens einem der vorhergehenden Ansprüche, **dadurch gekennzeichnet, dass** mit Zuschalten des Aktuators (A) zumindest einige der Schneidklingen (3) und/oder der von dem Rotor (R) zugeordneten Abstreifern (4) in eine Passivstellung verstellbar sind.

## Claims

1. Cutting mechanism (S) for agricultural harvested material, more especially for a baler or a loader wagon, said mechanism having a rotor (R), which is rotatably drivably mounted in a conveyor chute (1) relative to cutting blades (3) in a cutting direction (X), and which communicates with a line of drives (7, 5), containing an overload coupling (6), and said mechanism having an actuator (A), which can be selectively switched-on and with which the rotor (R) is rotatable via a coupling (K), operating in only one direction, in the event of a blockage, **characterised in that** the actuator (A) acts, via the coupling (K), on the rotor (R) in the normal cutting direction (X) thereof.

2. Cutting mechanism according to claim 1, **characterised in that** the actuator (A) can be brought to act in the drive path towards the rotor (R) downstream of the overload coupling (6).

3. Cutting mechanism according to claim 1, **characterised in that** the actuator (A) is at least one piston-and-cylinder unit (12) which, via a pivotal lever (9) and a blade (10), acts on a pawl wheel (8) or a step-by-step switching mechanism on a shaft (2) of the rotor (R).

4. Cutting mechanism according to claim 1, **characterised in that** the actuator (A) co-operates with the rotor shaft end situated opposite a connection for the line of drives (7, 5).

5. Cutting mechanism according to claim 1, **characterised in that** the actuator (A) is an hydraulic motor which co-operates with the rotor (R) via the coupling (K), which is in the form of a freewheel coupling.

6. Cutting mechanism according to at least one of the preceding claims, **characterised in that** the torque, which can be generated with the actuator (A) at the rotor (R), is in a predetermined relation relative to the response torque of the overload coupling (6).

7. Cutting mechanism according to at least one of the preceding claims, **characterised in that** the actuator (A) can be switched-on via a control apparatus (C) selectively and during or shortly prior to the response of the overload coupling (6).

8. Cutting mechanism according to at least one of the preceding claims, **characterised in that**, with the switching-on of the actuator (A), at least some of the cutting blades (3) and/or some of the scrapers (4), associated with the rotor (R), are displaceable into an idle position.

## Revendications

1. Dispositif de coupe (S) pour produit agricole récolté, en particulier pour une presse à balles ou une voiture de chargement, avec un rotor (R) logé dans un compartiment de transport (1) de façon entraînée en rotation par rapport à des lames de coupe (3) dans un sens de coupe (X), lequel rotor est raccordé à une branche d'entraînement (7, 5) contenant un accouplement de surcharge (6), et avec un actionneur (A) pouvant être mis en route de façon optionnelle, avec lequel le rotor (R) est mis en rotation dans le cas d'un engorgement au moyen d'un accouplement (K) agissant dans seulement une direction, **caractérisé en ce que** l'actionneur (A) agit par l'accouplement (K) sur le rotor (R) dans sa direction de coupe (X) normale.

2. Dispositif de coupe selon la revendication 1, **caractérisé en ce que** l'actionneur (A) peut être amené à agir dans la course d'entraînement vers le rotor (R) en aval de l'accouplement de surcharge (6).

3. Dispositif de coupe selon la revendication 1, **caractérisé en ce que** l'actionneur (A) est au moins une unité piston-cylindre (12), qui agit au moyen d'un levier basculant (9) et d'un cliquet (10) sur une roue à cliquet (8) ou un dispositif de commutation pas-à-pas sur un arbre (2) du rotor (R).

4. Dispositif de coupe selon la revendication 1, **caractérisé en ce que** l'actionneur (A) s'applique sur l'extrémité de l'arbre de rotor opposé à un branchement de la branche de raccordement (7, 5).

5. Dispositif de coupe selon la revendication 1, **caractérisé en ce que** l'actionneur (A) est un moteur hydraulique s'appliquant sur le rotor (R) par l'accouplement (K) est conçu comme accouplement à roue libre.

6. Dispositif de coupe selon au moins l'une quelconque des revendications précédentes, **caractérisé en ce que** le couple pouvant être généré avec l'actionneur (A) sur le rotor (R) se trouve dans une relation prédéfinie par rapport au couple de déclenchement de l'accouplement de surcharge (6).

7. Dispositif de coupe selon au moins l'une quelconque des revendications précédentes, **caractérisé en ce que** l'actionneur (A) peut être mis en route au moyen d'un dispositif de commande (C) au choix et en cas de déclenchement ou peu avant le déclenchement de l'accouplement de surcharge (6).

8. Dispositif de coupe selon au moins l'une quelconque des revendications précédentes, **caractérisé en ce que**, avec la mise en route de l'actionneur (A), au moins certaines des lames de coupe (3) et/ou certains des racleurs (4) attribués par le rotor (R) peuvent être déplacés dans une position passive.
